# EUROPÄISCHE PATENTANMELDUNG

(11) **EP 2 306 254 A1**
(43) Veröffentlichungstag der Anmeldung: **06.04.2011**
(21) Anmeldenummer: 10175180.8
(22) Anmeldetag: 03.09.2010
(51) Int. Cl.: G05B 19/409

(54) **Vorrichtung zum Behandeln von Behältnissen mit mobiler Anzeige**

(30) Priorität: 01.10.2009 DE 102009043671
(71) Anmelder: Krones AG, 93073 Neutraubling (DE)
(72) Erfinder: Hahn, Wolfgang, 93093, Donaustauf (DE); Zölfl, Dr. Markus, 94526, Metten (DE)
(74) Vertreter: Bittner, Bernhard

(57) **Zusammenfassung**

Eine Vorrichtung (1) zum Behandeln von Behältnissen (10), mit wenigstens einer Behandlungseinrichtung (2), welche die Behältnisse (10) in einer vorgegebenen Weise behandelt, einer Transporteinrichtung (4), welche die Behältnisse (10) entlang eines vorgegebenen Transportpfads transportiert, mit einer Steuerungseinrichtung (12) zum Steuern der Vorrichtung, mit einer Eingabeeinheit (14), über welche durch einen Benutzer Informationen an die Vorrichtung eingebbar sind. Erfindungsgemäß weist die Vorrichtung (1) eine Informationsausgabeeinheit (20) zur Ausgabe von Informationen an den Benutzer auf, wobei diese Informationseinheit (20) tragbar ausgeführt ist und wenigstens mittelbar in Kommunikationsverbindung mit der Eingabeeinheit (14) bringbar ist.

## Beschreibung

Die vorliegende Erfindung bezieht sich auf eine Vorrichtung zum Behandeln von Behältnissen und insbesondere von Getränkebehältnissen. Derartige Vorrichtungen, wie beispielsweise Etikettiermaschinen, Füllmaschinen oder Blasmaschinen für Kunststoffbehältnisse sind aus dem Stand der Technik bekannt. Dabei handelt es sich üblicherweise um sehr große Anlagen, welche von dem Benutzer nicht vollständig einsehbar sind. Diese Maschinen weisen dabei üblicherweise ein Bedienpult zur Bedienung der Maschine auf. Die Bedienpulte sind in der Regel stationär bzw. allenfalls schwenkbar an der Maschine angeordnet.

Ein derartiges Bedienpult ist beispielsweise aus der DE 10 2005 049 098 A1 bekannt. Dieses Bedienpult weist dabei in einem zentralen Bereich auch eine Anzeigeeinheit auf. Aus der DE 100 51 449 A1 ist eine mobile Arbeitsmaschine mit zwei Bedienpulten bekannt, welche so ausgeführt ist, dass sich jeweils nur ein Bedienpult in einem aktiven Zustand befindet.

Aus der DE 100 58 021 A1 ist ein Aufzug mit einer an einem Mast verfahrbaren Plattform bekannt. Dabei ist den Steuereinrichtungen dieses Aufzugs ein mobiles Bedienpult zugeordnet, welches über Steckverbindungen wahlweise mit den Steuereinrichtungen des Aufzugs verbindbar ist. Auf diese Weise wird eine Steuerung des Aufzugs aus mehreren unterschiedlichen Positionen bedienbar. Eine derartige Vorgehensweise ist jedoch bei den oben erwähnten Anlagen zur Behandlung von Behältnissen aus Sicherheitsgründen nicht gewünscht. Vielmehr soll die eigentliche Bedienung hier nur von einer bestimmten Position aus erfolgen. Allerdings werden in der Praxis beispielsweise in dem Bedienpult oder Touchpanel hinterlegte Werte wie beispielsweise Einstellwerte, auch an solchen Stellen benötigt, die aus der Position des Bedienpults nicht einsehbar bzw. nicht erreichbar sind. Der Bediener der Maschine muss sich in diesem Fall die jeweiligen Werte aus dem Bedienpult merken bzw. aufschreiben. Entsprechend gilt dies auch für Einstellwerte, die in dem Bedienpult abgespeichert werden müssen und beispielsweise von anderen Anlagenteilen stammen. Insbesondere bei einer Vielzahl von Anlagenteilen ist dies eine sehr aufwändige Prozedur.

Auch andere Informationen, wie beispielsweise Hinweise für eine Fehlerbeseitigung (Trouble - Shooting) oder für die Umrüstung der Anlage sind dabei ebenfalls vor Ort nicht verfügbar sondern der Benutzer muss sich diese merken. Aus diesen Gründen ergeben sich bei der Bedienung der Anlage Zeitverluste bzw. Zusätzliche Wegstrecken vom und zu dem Bedienpult. Daneben kann es dadurch, dass sich der Benutzer bestimmte Werte merken muss, zu möglichen Datenverlusten oder sogar zu Fehlbedienungen der Anlage kommen.

Der vorliegenden Erfindung liegt daher die Aufgabe zugrunde, die Bedienung von Vorrichtungen zur Behandlung von Behältnissen und insbesondere von Getränkebehältnissen zu vereinfachen. Daneben soll die Bedienzuverlässigkeit für derartige Anlagen erhöht werden. Diese Aufgabe wird erfindungsgemäß durch den Gegenstand von Anspruch 1 erreicht. Vorteilhafte Ausführungsformen und Weiterbildungen sind Gegenstand der Unteransprüche.

Eine erfindungsgemäße Vorrichtung zum Behandeln von Behältnissen weist wenigstens eine Behandlungseinrichtung auf, welche die Behältnisse in einer vorgegebenen Weise behandelt, eine Transporteinrichtung, welche die Behältnisse entlang eines vorgegebenen Transportpfads transportiert, und eine Steuerungseinrichtung zum Steuern der Vorrichtung. Die Vorrichtung weist weiterhin eine Eingabeeinheit auf, über welche durch einen Benutzer Informationen bzw. Befehle an die Vorrichtung eingebbar sind bzw. über welche die Vorrichtung bedienbar ist.

Erfindungsgemäß weist die Vorrichtung wenigstens eine Informationsausgabeeinheit zur Ausgabe von Informationen an den Benutzer auf, wobei diese Informationseinheit tragbar bzw. mobil ausgeführt ist und wenigstens mittelbar in Kommunikationsverbindung mit der Eingabeeinheit bringbar ist.

Unter einem Behandeln von Behältnissen wird jegliche Art der Einwirkung auf die Behältnisse verstanden, wie insbesondere eine Herstellung von Kunststoffvorformlingen, eine Blasumformung von Kunststoffvorformlingen zu Kunststoffbehältnissen, ein Befüllen von Behältnissen, ein Sterilisieren von Behältnissen, ein Etikettieren von Behältnissen, ein Transportieren von Behältnissen und dergleichen. Bei der Eingabeeinheit kann es sich beispielsweise um ein Bedienpult bzw. Touchpanel handeln, mit dem der Benutzer Befehle oder Eingaben an die Maschine übermitteln kann. Auch ist es möglich, dass ein derartiges Bedienpult die Vorgabe oder Änderung von Maschinenparametern erlaubt.

Unter einem wenigstens mittelbaren in Kommunikationsverbindung bringen wird verstanden, dass die Informationsausgabeeinheit sowohl unmittelbar mit der Eingabeeinheit verbindbar sein kann, oder aber auch andere Elemente zwischengeschaltet sein können, wie etwa die Steuereinrichtung der Vorrichtung oder dergleichen. Insbesondere wird jedoch durch die Kommunikationsverbindung eine Übermittelung von Informationen bzw. Daten zwischen der Eingabeeinrichtung und der Informationsausgabeeinheit in wenigstens einer Richtung, bevorzugt in beiden Richtungen ermöglicht.

Damit wird vorgeschlagen, eine zusätzliche, von dem Bedienpult unabhängige mobile Informationsausgabeeinheit bzw. Anzeige vorzusehen, welche der Benutzer an jeden Ort der Vorrichtung mitnehmen kann, um so in einfacher Weise Daten an die Stellen mitbringen kann, an denen sie gebraucht, bzw. z.B. mit anderen Daten verglichen werden können. Nach dem Gebrauch kann die Informationsausgabeeinheit beispielsweise in der Nähe des Bedienpults, insbesondere in einer sog. Docking - Station abgelegt werden.

Bei einer vorteilhaften Ausführungsform weist die Informationsausgabeeinheit eine Anzeigeeinrichtung, d.h. eine Einrichtung, welche Informationen für den Benutzer in optisch wahrnehmbarer Weise ausgibt, auf. Es wären jedoch auch andere Ausgabemöglichkeiten wie beispielsweise akustische Signale, Sprachausgaben und/oder ggfs. auch taktile Ausgaben denkbar.

Bevorzugt weist die Informationsausgabeeinheit eine Befestigungseinrichtung auf, welche eine lösbare Befestigung der Informationsausgabeeinheit an unterschiedlichen Bereichen der Vorrichtung aufweist. Bei dieser Befestigungseinrichtung kann es sich beispielsweise um eine magnetische Befestigungseinrichtung handeln, mit der die Informationsausgabeeinheit kurzzeitig an beliebigen Orten der Vorrichtung angeordnet werden kann. So kann der Benutzer die Informationsausgabeeinheit kurzzeitig an beliebigen Orten der Anlage anbringen um so beispielsweise bequem Informationen auslesen zu können. Es wäre jedoch auch möglich, dass es sich bei der Befestigungseinrichtung um eine Klemmverbindung, eine Clipverbindung, eine Schnappverbindung oder dergleichen handelt, die zumindest an bestimmten vorgegebenen Bereichen der Vorrichtung anbringbar ist.

Bei einer weiteren vorteilhaften Ausführungsform ist die Informationsausgabeeinheit zum wenigstens zeitweisen Stand- alone - Betrieb ausgelegt. So weist die Informationsausgabeeinheit bevorzugt eine Energiequelle wie etwa eine aufladbare Batterie auf.

Bei einer weiteren vorteilhaften Ausführungsform weist die Informationsausgabeeinheit eine Sendeeinrichtung zum drahtlosen Übermitteln von Signalen an die Eingabeeinheit auf. So kann der Benutzer beispielsweise in bestimmten Maschinenbereichen Informationen in die Informationsausgabeeinheit eingeben und diese Informationen können an die Eingabeeinheit übermittelt bzw. gesendet werden. Dabei werden diese Daten insbesondere drahtlos an die Eingabeeinheit übermittelt, es wäre jedoch auch möglich, dass die Informationsausgabeeinheit über eine Kabelverbindung mit der Eingabeeinheit verbunden wird.

Daneben kann die Vorrichtung eine Ladestation bzw. Docking - Station aufweisen, in der die Informationsausgabeeinheit, insbesondere in einem Ruhebetrieb, abgelegt werden kann. Während des Aufenthalts der Informationsausgabeeinheit in dieser Docking - Station können auch Informationen zwischen der Eingabeeinheit bzw. anderen Bereichen der Vorrichtung und der Informationsausgabeeinheit ausgetauscht werden.

Bei einer weiteren vorteilhaften Ausführungsform weist die Informationsausgabeeinheit eine Speichereinrichtung zum wenigstens vorübergehenden Speichern von Daten auf. Auf diese Weise können beispielsweise durch den Benutzer Daten in die Informationsausgabeeinheit eingegeben und dort abgespeichert werden. Es wäre jedoch auch möglich, dass von der Eingabeeinheit aus Daten in der Informationsausgabeeinheit abgespeichert werden. Daneben können auch bestimmte Daten bereits vorab bzw. herstellerseitig in der Speichereinrichtung abgelegt werden.

Bei einer weiteren vorteilhaften Ausführungsform weist die Informationsausgabeeinheit eine Informationseingabeeinrichtung auf, über welche in die Informationsausgabeeinheit Informationen eingebbar sind. Bei dieser Informationseingabeeinrichtung kann es sich beispielsweise um ein Tastenfeld handeln, mittels dem der Benutzer Daten, die er beispielsweise aus bestimmten Maschinenbereichen ablesen kann, in die Informationsausgabeeinheit eingibt.

Dabei ist es möglich, dass anschließend derartig eingegebene Daten von der Informationsausgabeeinheit in die Eingabeeinrichtung der Vorrichtung bzw. Maschine eingelesen werden.

Bei einer weiteren vorteilhaften Ausführungsform weist die Informationsausgabeeinheit eine Identifikationseinheit auf, welche eine bestimmte Informationsausgabeeinheit einer bestimmten Eingabeeinrichtung der Anlage zuordnet. So kann beispielsweise in der Informationsausgabeeinheit eine Adresse abgelegt sein, welche die Informationsausgabeeinheit eindeutig identifiziert. Weiterhin könnte in der Speichereinrichtung der Informationsausgabeeinheit auch eine Historie über durchgeführte Änderungen ablegbar sein. Auf diese Weise ist es für einen Benutzer stets nachvollziehbar, ob bestimmte Änderungen bereits - etwa durch einen anderen Benutzer - durchgeführt wurden.

Auch wäre es möglich, dass seitens einzelner Anlagenteile ein Identifikationssignal ausgegeben wird, welches diese eindeutig identifiziert, so dass die Informationsausgabeeinheit eindeutig feststellen kann, mit welchen Anlagenteilen oder mit welcher Eingabeeinrichtung sie gerade kommuniziert.

Durch das Vorsehen einer Adresse kann erreicht werden, dass nur durch eine spezielle Informationsausgabeeinheit Daten ausgelesen bzw. an die Eingabeeinrichtung ausgegeben werden.

Bevorzugt weist die Vorrichtung eine Lokalisierungseinheit auf, um eine Position der Informationsausgabeeinheit bezüglich der Vorrichtung zu bestimmen. So ist es beispielsweise möglich, dass selbststätig festgestellt wird, in welchem Bereich der Vorrichtung bzw. in der Nähe welcher Systeme der Vorrichtung sich die Informationsausgabeeinheit zu einem bestimmten Zeitpunkt befindet. Auf diese Weise könnten auf der Informationsausgabeeinheit diejenigen Informationen ausgegeben werden, welche gerade für diejenigen Anlagenteile relevant sind, in denen sich die Informationsausgabeeinheit befindet. Eine derartige Lokalisierungseinheit könnte beispielsweise ein Bakensystem aufweisen, wobei an der Vorrichtung eine Vielzahl von Baken angeordnet ist, welche in der Lage sind, durch ein Zusammenwirken genau die tatsächliche Position der Informationsausgabeeinheit zu bestimmen. Daneben könnte jedoch auch ein GPS - System oder (eine Vielzahl von) Beschleunigungssensoren Anwendung finden.

Vorteilhaft weist die Vorrichtung wenigstens eine Aufnahmeeinrichtung zur Aufnahme der Informationsausgabeeinheit auf. Hierbei kann es sich um Aufnahmetaschen handeln, die beispielsweise an Gehäuseteilen oder in Säulen der Vorrichtung vorhanden sind, und in denen die Informationsausgabeeinheit zum Schutz gegen Beschädigungen eingelegt werden kann. Diese Aufnahmeeinrichtung könnte dabei eine schwenkbare Klappe aufweisen, damit die Informationsausgabeeinheit vollständig geschützt abgelegt werden kann. Auch könnte in der Aufnahmeeinrichtung eine Docking - Station für die Informationsausgabeeinheit integriert sein.

Bei einer weiteren vorteilhaften Ausführungsform weist die Vorrichtung eine Auffindungseinrichtung für die Informationsausgabeeinrichtung auf. So ist es möglich, dass auf Wunsch des Benutzers seitens der Vorrichtung bzw. der Eingabeeinrichtung ein Suchsignal generiert und an die Informationsausgabeeinheit übermittelt wird, welches dann bewirkt, dass die Informationsausgabeeinheit selbst ein insbesondere akustisch wahrnehmbares Signal ausgibt, so dass sie von einem Benutzer leichter aufgefunden werden kann.

Bei einer weiteren vorteilhaften Ausführungsform weist die Informationsausgabeeinheit eine Empfangseinrichtung zum Empfang von Signalen aufweist. Auf diese Weise kann die Informationsausgabeeinheit beispielsweise von der Eingabeeinrichtung Signale bzw. Daten empfangen, welche der Benutzer dann an den gewünschten Stellen der Vorrichtung ablesen und beispielsweise zum anpassen der Anlage verwenden kann.

Bevorzugt ist die die Informationsausgabeeinheit mit wenigstens einer weiteren Einrichtung der Vorrichtung in Kommunikationsverbindung bringbar. Bei dieser weiteren Einrichtung kann es sich beispielsweise um verschiedene weitere Module der Gesamtvorrichtung handeln, wie etwa ein Blasmodul oder eine Befüllungseinheit, Auf diese Weise können geänderte Parameter automatisch in der Informationsausgabeeinheit übernommen werden, so dass eine Fehlergefahr weiter verringert wird. Auch wäre es möglich, dass die Informationsausgabeeinheit mit weiteren Geräten, wie beispielsweise einem übergeordneten Analysesystem in Kommunikationsverbindung bringbar ist. So könnten Daten einzelner Anlagenteile leichter in einem zentralen Verwaltungssystem verwaltet werden.

In einer weiteren vorteilhaften Ausführungsform weist die Informationseingabeeinheit eine Vergleichseinrichtung auf, welche in der Speichereinrichtung gespeicherte Daten mit über die Informationseingabeeinrichtung eingegebenen Daten vergleicht. Auf diese Weise kann ein sehr schneller Datenabgleich vorgenommen werden und beispielsweise sehr schnell überprüft werden, ob seitens des Benutzers durchgeführte Änderungen sinnvoll sind. Bei den in der Speichereinrichtung abgespeicherten Daten kann es sich beispielsweise um für verschiedene Anlagenteile charakteristische Kennwerte handeln.

Bei einer weiteren vorteilhaften Ausführungsform ist eine Bedienung der Vorrichtung durch die Informationsausgabeeinrichtung verhindert. Dies bedeutet, dass die Informationsausgabeeinheit hier lediglich ein passives Gerät darstellt, welches in erster Linie zu Informationszwecken für den Benutzer dient, wobei jedoch eine Steuerung der Vorrichtung oder ggfs. auch ein aktives Ändern von Daten und Werten, welche für den Betrieb der Vorrichtung relevant sind, nicht möglich ist. Diese Ausführungsform ist unter Sicherheitsaspekten relevant, da eine Bedienung der Vorrichtung durch die Informationsausgabeeinheit gerade verhindert werden soll.

Bei einer weiteren vorteilhaften Ausführungsform weist die Informationsausgabeeinheit Informationsauslesemittel zum Auslesen von Informationen von Einrichtungen der Vorrichtung auf. So könnte die Informationsausgabeeinheit beispielsweise einen Barcodescanner aufweisen, der Barcodes von Anlagenteilen oder auch von zu verarbeitendem Material bzw. von Etiketten oder dergleichen erkennt und in Antwort hierauf dem Benutzer Informationen beispielsweise über notwendige Änderungen ausgibt.

Vorteilhaft ist wenigstens eine Einrichtung der Vorrichtung hinsichtlich wenigstens eines Parameters verstellbar. Hier kann es sich beispielsweise um Einstellungen etwa für eine Blasmaschine oder dergleichen handeln. Die erfindungsgemäße Informationsausgabeeinheit dient als Hilfsmittel, um derartige Einstellungen der Parameter für den Benutzer zu erleichtern.

Vorteilhaft ist wenigstens ein Signal, welches für diesen genannten Parameter charakteristisch ist, zwischen der Informationsausgabeeinheit und der Eingabeeinheit kommunizierbar. Auf diese Weise können die maschinenrelevanten Parameter leicht ausgelesen werden. Insbesondere kann ein derartiges Signal bzw. der Parameter von der Eingabeeinheit an die Informationsausgabeeinheit abgegeben werden.

Weitere Vorteile und Ausführungsformen ergeben sich aus der beigefügten Figur. Dabei zeigt:

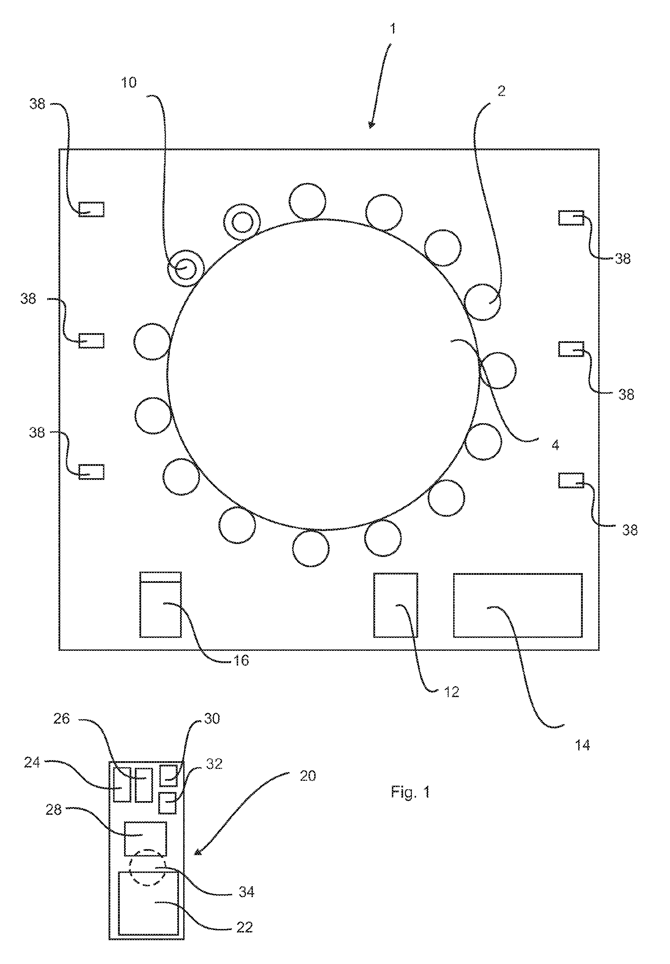

- Fig. 1: eine grobschematische Darstellung einer erfindungsgemäßen Vorrichtung.

Fig. 1 zeigt eine grob schematische Darstellung einer erfindungsgemäßen Vorrichtung 1. In Fig. 1 wird die Erfindung anhand einer Blasformmaschine dargestellt, es wird jedoch darauf hingewiesen, dass die Erfindung auch auf andere Anlagen und insbesondere Anlagen, welche der Herstellung und Behandlung von Behältnissen dienen, anwendbar ist.

Das Bezugszeichen 4 kennzeichnet eine Transporteinrichtung, wie beispielsweise ein Blasrad, an dem eine Vielzahl von Blasstationen 2 angeordnet ist, welche zum Blasumformen von Kunststoffvorformlingen zu Behältnissen dienen. Das Bezugszeichen 14 bezieht sich auf eine Eingabeeinheit, über welche der Benutzer Eingaben bzw. Steuerungsbefehle an die Vorrichtung 1 übermitteln kann. Bei dieser Eingabeeinrichtung 14 kann es sich beispielsweise um ein Tastenfeld oder auch einen Touchscreen handeln.

Das Bezugszeichen 12 bezieht sich auf eine Steuerungseinrichtung zum Steuern der Vorrichtung. Diese Steuerungseinrichtung 12 kann dabei Befehle oder Eingaben von der Eingabeeinheit aufnehmen und so die Steuerung der Anlage bewirken.

Das Bezugszeichen 20 kennzeichnet in ihrer Gesamtheit eine tragbare Informationsausgabeeinheit, welche hier im Vergleich zu der Vorrichtung 1 stark übertrieben groß dargestellt ist. Diese Informationsausgabeeinheit weist eine Anzeigeeinrichtung 22 wie ein Display auf, mit dem von einem Benutzer eingegebene oder einzugebende Daten dargestellt werden können.

Das Bezugszeichen 34 bezieht sich auf eine Befestigungseinrichtung, mit welcher die Informationsausgabeeinheit an unterschiedlichen Bereichen der Vorrichtung, wie beispielsweise an unterschiedlichen Bereichen einer Gehäusewandung der Vorrichtung 1 angeordnet werden kann. Bei dieser Befestigungseinrichtung kann es sich beispielsweise um einen Permanentmagneten handeln.

Über eine Informationseingabeeinrichtung 28 wie beispielsweise ein Tastenfeld können durch den Benutzer Daten in die Informationsaustauscheinheit eingegeben werden. So ist es beispielsweise möglich dass der Benutzer an bestimmten Anlagenteilen bestimmte Parameter oder Werte ändert oder einstellt und diese Werte manuell über die Informationseingabeeinrichtung in die Informationsausgabeeinheit 20 eingibt.

Über eine Sendeeinrichtung 24 kann die Informationsausgabeeinheit 20 mit weiteren Geräten und insbesondere mit der Eingabeeinheit 14 kommunizieren, so dass auch seitens des Benutzers notierte Werte unmittelbar an die Eingabeeinheit 14 übertragen werden können, um so eine weitere Fehlerquelle auszuschließen.

In einer Speichereinrichtung 26 der Informationsausgabeeinheit 20 können Daten gespeichert werden, wie etwa von dem Benutzer eingegebene Werte aber auch Daten, welche die Informationsausgabeeinheit von anderen Geräten wie beispielsweise der Eingabeeinheit 14 empfangen hat.

Das Bezugszeichen 30 bezieht sich auf eine Lokalisierungseinheit für die Informationsausgabeeinheit. Mittels dieser Lokalisierungseinheit kann eine örtliche Position der Informationsausgabeeinheit festgestellt werden. Zu diesem Zweck können an der Vorrichtung Sende- oder Empfangseinheiten wie Baken 38 vorgesehen sein, welche die Lokalisierungseinheit bzw. die Informationsausgabeeinheit lokalisieren. Über eine entsprechende Anzeigeeinrichtung im Bereich der Eingabeeinheit 14 kann dem Benutzer angezeigt werden, wo sich die Informationsausgabeeinheit gerade befindet. Über ein derartiges Bakensystem ist eine Lokalisierung der Informationsausgabeeinheit in einem Bereich von wenigen 10 cm möglich.

Über eine Empfangseinrichtung 32 kann die Informationsausgabeeinheit 20 auf Signale bzw. Parameter von anderen Anlageteilen aufnehmen. Das Bezugszeichen 16 bezieht sich auf eine Aufnahmeeinrichtung zum Aufnehmen der Informationsausgabeeinheit 20. Diese Aufnahmeeinrichtung 16 kann dabei eine (nicht im Detail dargestellte) Klappe aufweisen, die etwa aus einer Gehäusewandung herausklappbar ist. In dieser Aufnahmeeinrichtung kann auch eine Dockingstation (nicht gezeigt) für die Informationsausgabeeinheit 20 integriert sein.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2: Behandlungseinrichtung
- 4: Transporteinrichtung, Blasrad
- 10: Behältnis
- 12: Steuerungseinrichtung
- 14: Eingabeeinheit
- 16: Aufnahmeeinrichtung
- 20: Informationsausgabeeinheit
- 22: Anzeigeeinrichtung
- 24: Sendeeinrichtung
- 26: Speichereinrichtung
- 28: Informationseingabeeinrichtung
- 30: Lokalisierungseinheit
- 32: Empfangseinrichtung
- 34: Befestigungseinrichtung
- 38: Baken

## Patentansprüche

1. Vorrichtung (1) zum Behandeln von Behältnissen (10), mit wenigstens einer Behandlungseinrichtung (2), welche die Behältnisse (10) in einer vorgegebenen Weise behandelt, einer Transporteinrichtung (4), welche die Behältnisse (10) entlang eines vorgegebenen Transportpfads transportiert, mit einer Steuerungseinrichtung (12) zum Steuern der Vorrichtung, mit einer Eingabeeinheit (14), über welche durch einen Benutzer Informationen an die Vorrichtung eingebbar sind,
**dadurch gekennzeichnet, dass**
die Vorrichtung (1) wenigstens eine Informationsausgabeeinheit (20) zur Ausgabe von Informationen an den Benutzer aufweist, wobei diese Informationseinheit (20) tragbar ausgeführt ist und wenigstens mittelbar in Kommunikationsverbindung mit der Eingabeeinheit (14) bringbar ist.

2. Vorrichtung (1) nach Anspruch 1,
**dadurch gekennzeichnet, dass**
die Informationsausgabeeinheit (20) eine Anzeigeeinrichtung (22) aufweist.

3. Vorrichtung (1) nach wenigstens einem der vorangegangenen Ansprüche,
**dadurch gekennzeichnet, dass**
die Informationsausgabeseinheit (20) eine Befestigungseinrichtung (34) aufweist, welche eine lösbare Befestigung der Inforamtionsausgabeeinheit (20) an unterschiedlichen Bereichen der Vorrichtung (1) aufweist.

4. Vorrichtung (1) nach wenigstens einem der vorangegangenen Ansprüche,
**dadurch gekennzeichnet, dass**
die Informationsausgabeeinheit (20) eine Sendeeinrichtung (24) zum drahtlosen Übermitteln von Signalen an die Eingabeeinheit (14) aufweist.

5. Vorrichtung (1) nach wenigstens einem der vorangegangenen Ansprüche,
**dadurch gekennzeichnet, dass**
die Informationsausgabeeinheit (20) eine Speichereinrichtung (26) zum vorübergehenden Speichern von Daten aufweist.

6. Vorrichtung (1) nach wenigstens einem der vorangegangenen Ansprüche,
**dadurch gekennzeichnet, dass**
die Informationsausgabeeinheit (20) eine Informationseingabeeinrichtung (28) aufweist, über welche in die Informationsausgabeeinheit (20) Informationen eingebbar sind.

7. Vorrichtung (1) nach wenigstens einem der vorangegangenen Ansprüche,
**dadurch gekennzeichnet, dass**
die Vorrichtung (1) eine Lokalisierungseinheit (30) aufweist, um eine Position der Informationsausgabeeinheit (20) bezüglich der Vorrichtung (1) zu bestimmen.

8. Vorrichtung (1) nach wenigstens einem der vorangegangenen Ansprüche,
**dadurch gekennzeichnet, dass**
die Vorrichtung (1) wenigstens eine Aufnahmeeinrichtung (16) zur Aufnahme der Informationsausgabeeinheit (20) aufweist.

9. Vorrichtung (1) nach wenigstens einem der vorangegangenen Ansprüche,
**dadurch gekennzeichnet, dass**
die Informationsausgabeeinheit eine Empfangseinrichtung (32) zum Empfang von Signalen aufweist

10. Vorrichtung (1) nach wenigstens einem der vorangegangenen Ansprüche,
**dadurch gekennzeichnet, dass**
die Informationsausgabeeinheit (20) mit wenigstens einer weiteren Einrichtung der Vorrichtung in Kommunikationsverbindung bringbar ist.

11. Vorrichtung (1) nach wenigstens einem der vorangegangenen Ansprüche,
**dadurch gekennzeichnet, dass**
die Informationseingabeeinheit eine Vergleichseinrichtung aufweist, welche in der Speichereinrichtung gespeicherte Daten mit über die Informationseingabeeinrichtung eingegebenen Daten vergleicht.

12. Vorrichtung (1) nach wenigstens einem der vorangegangenen Ansprüche,
**dadurch gekennzeichnet, dass**
eine Bedienung der Vorrichtung (1) durch die Informationsausgabeeinrichtung (20) verhindert ist.

13. Vorrichtung (1) nach wenigstens einem der vorangegangenen Ansprüche,
**dadurch gekennzeichnet, dass**
die Informationsausgabeeinheit (20) Informationsauslesemittel zum Auslesen von Informationen von Einrichtungen der Vorrichtung (1) aufweist.

14. Vorrichtung (1) nach wenigstens einem der vorangegangenen Ansprüche,
**dadurch gekennzeichnet, dass**
wenigstens eine Einrichtung der Vorrichtung (1) hinsichtlich wenigstens eines Parameters verstellbar ist.

15. Vorrichtung (1) nach Anspruch 14,
**dadurch gekennzeichnet, dass**
wenigstens ein Signal, welches für den Parameter (P) charakteristisch ist, zwischen der Informationsausgabeeinheit (20) und der Eingabeeinheit (14) kommunizierbar ist.
